# EUROPEAN PATENT APPLICATION

(11) **EP 4 568 190 A1**
(43) Date of publication of application: **11.06.2025**
(21) Application number: 23214091.3
(22) Date of filing: 04.12.2023
(51) Int. Cl.: H04L 12/40

(54) **IMPROVING THE WAKE-UP TIME OF A CAN DEVICE**

(71) Applicant: NXP USA, Inc., Austin TX 78735 (US)
(72) Inventor: Regner, Markus, 5656 AG Eindhoven (NL); Schmid, Dietmar, 5656 AG Eindhoven (NL)
(74) Representative: Schmütz, Christian Klaus Johannes

(57) **Abstract**

The present invention relates to a Controller Area Network, CAN, module comprising: a first transmit data, TXD, interface, a first receive data, RXD, interface, a CAN controller, a wake-up unit, and a bypass unit, wherein the CAN controller is coupled to the first TXD interface and to the first RXD interface, wherein the bypass unit is coupled to the first TXD interface, wherein the CAN controller is configured only in an operation state to send a CAN frame to a CAN transceiver via the first TXD interface, wherein the wake-up unit is configured to control the CAN controller such that the CAN controller changes from a sleep state to the operation state, wherein the bypass unit is configured to send a predefined bit pattern, referred to as a wake-up pattern, to the CAN transceiver via the first TXD interface, and wherein the wake-up unit is configured to control the bypass unit so that the bypass unit sends the wake-up pattern via the first TXD interface.

## Description

### TECHNICAL FIELD

The present disclosure relates to a controller area network, CAN, module, a CAN system including the CAN module and a method for the CAN module.

### BACKGROUND

Controller area network (CAN) buses can be used for communications within vehicles, in particular within automobiles. It will be appreciated that CAN buses also have application outside of the field of automobiles. A CAN bus system may include multiple CAN devices, so called as nodes or electronic control units (ECUs), such as an engine control module (ECM), a power train control module (PCM), airbags, antilock brakes, cruise control, electric power steering, audio systems, windows, doors, mirror adjustment, battery and recharging systems for hybrid/electric cars, and many more. Several nodes may be connected to a joint CAN network, such that the nodes can communicate among each other over the CAN network using a CAN protocol. The CAN protocol is used to enable communications between the various nodes. The data link layer of the CAN protocol is standardized as International Standards Organization (ISO) 11898-1:2003. CAN Flexible Data-Rate or "CAN FD" is an extension of the standardized CAN data link layer protocol and is integrated into the ISO11898-1:2015 standard. CAN FD may provide higher data rates. The standardized CAN data link layer protocol is being further extended to provide even higher data rates. A further extension, referred to as CAN XL, with a new (optional) level scheme on the physical layer allowing even higher data rates is in the definition phase discussed under CiA610 (CAN in Automation) and is moving towards standardization in the form of ISO11898-1:202x.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a Controller Area Network, CAN, module is provided. The CAN module comprising: a first transmit data, TXD, interface, a first receive data, RXD, interface, a CAN controller, a wake-up unit, and a bypass unit, wherein the CAN controller is coupled to the first TXD interface and to the first RXD interface, wherein the bypass unit is coupled to the first TXD interface, wherein the CAN controller is configured only in an operation state to send a CAN frame to a CAN transceiver via the first TXD interface, wherein the wake-up unit is configured to control the CAN controller such that the CAN controller changes from a sleep state to the operation state, wherein the bypass unit is configured to send a predefined bit pattern, referred to as a wake-up pattern, to the CAN transceiver via the first TXD interface, and wherein the wake-up unit is configured to control the bypass unit so that the bypass unit sends the wake-up pattern via the first TXD interface.

In one or more embodiments, the bypass unit is in a ready state while the CAN controller is in the sleep state and/or while the CAN controller changes from the sleep state to the operation state, and wherein the bypass unit is configured in the ready state to send the wake-up pattern via the first TXD interface.

In one or more embodiments, the wake-up unit is configured, while the CAN controller is in the sleep state and/or while the CAN controller changes from the sleep state to the operation state, to control the bypass unit so that the bypass unit sends the wake-up pattern via the first TXD interface.

In one or more embodiments, the wake-up unit is configured to control the bypass unit so that the bypass unit sends the wake-up pattern multiple times in succession via the first TXD interface.

In one or more embodiments, the CAN controller requires a wake-up time to change from the sleep state to the operation state, and wherein the bypass unit is configured to send at least five, ten, or fifteen wake-up patterns during the wake-up time via the first TXD interface.

In one or more embodiments, the bypass unit and the CAN controller are configured separately from each other.

In one or more embodiments, the wake-up pattern consists of a bit sequence of a dominant bit, a recessive bit, a dominant bit, and a recessive bit, or vice versa.

In one or more embodiments, the CAN module comprises a microprocessor in which the CAN controller, the wake-up unit, and the bypass unit are integrated.

In one or more embodiments, the microprocessor comprises a first memory, wherein the CAN module comprises a second memory, wherein the microprocessor is coupled to the second memory, and wherein the CAN controller is configured to load and/or receive data from the second memory for changing from the sleep state to the operation state.

In one or more embodiments, the bypass unit is coupled among the interfaces of the CAN module only to the first TXD interface and optionally to an enable interface of the CAN module.

In one or more embodiments, the bypass unit is coupled to the enable interface of the CAN module, and wherein the bypass unit is configured to send an enable signal to the CAN transceiver via the enable interface, and wherein the bypass unit is configured to send the at least one wake-up pattern only after sending the enable signal.

In one or more embodiments, the wake-up unit is coupled to the enable interface, wherein the wake-up unit is configured to send an enable signal to the CAN transceiver via the enable interface, and wherein the wake-up unit is configured to control the bypass unit such that the bypass unit sends the at least one wake-up pattern only after sending the enable signal.

According to a second aspect of the present disclosure, a CAN device is provided. The CAN device comprising a CAN module according to the first aspect and/or any of the preceding embodiments. The CAN device also comprising a CAN transceiver, the CAN transceiver comprising a second TXD interface coupled to the first TXD interface of the CAN module, wherein the CAN transceiver comprises a second RXD interface coupled to the first RXD interface of the CAN module, and wherein the CAN transceiver comprises a bus interface configured to be coupled to a CAN bus.

In one or more embodiments, the CAN transceiver is configured to generate a bus signal at the bus interface based on a received wake-up pattern such that the bus signal represents the wake-up pattern.

According to a third aspect of the present disclosure, a method for a controller area network, CAN, module is provided, wherein the CAN module comprising a first transmit data, TXD, interface, a first receive data, RXD, interface, a CAN controller, a wake-up unit, and a bypass unit, wherein the CAN controller is coupled to the first TXD interface and to the first RXD interface, wherein the bypass unit is coupled to the first TXD interface, wherein the CAN controller is configured to send a CAN frame to a CAN transceiver via the first TXD interface only in an operation state, wherein the bypass unit is configured to send a predefined bit pattern, referred to as a wake-up pattern, to the CAN transceiver via the first TXD interface, and wherein the method comprises the following steps: a) controlling the CAN controller by the wake-up unit so that the CAN controller changes from a sleep state to the operation state, and b) controlling the bypass unit by the wake-up unit so that the bypass unit sends the wake-up pattern via the first TXD interface.

In accordance with a fourth aspect of the present disclosure, a computer program is provided, comprising executable instructions which, when executed by a processing unit, cause the CAN module being configured to carry out the method of the third aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows a simplified block diagram of a CAN system.
Figure 2 shows a simplified block diagram of an embodiment of a CAN module and a CAN device.
Figure 3 shows simplified waveforms for a wake-up pattern.
Figure 4 shows simplified waveforms and indicated states of the CAN controller, the bypass unit and the CAN transceiver.
Figure 5 shows a simplified block diagram of another embodiment of a CAN module and a CAN device.
Figure 6 shows a simplified flow chart of the method.

### DESCRIPTION OF EMBODIMENTS

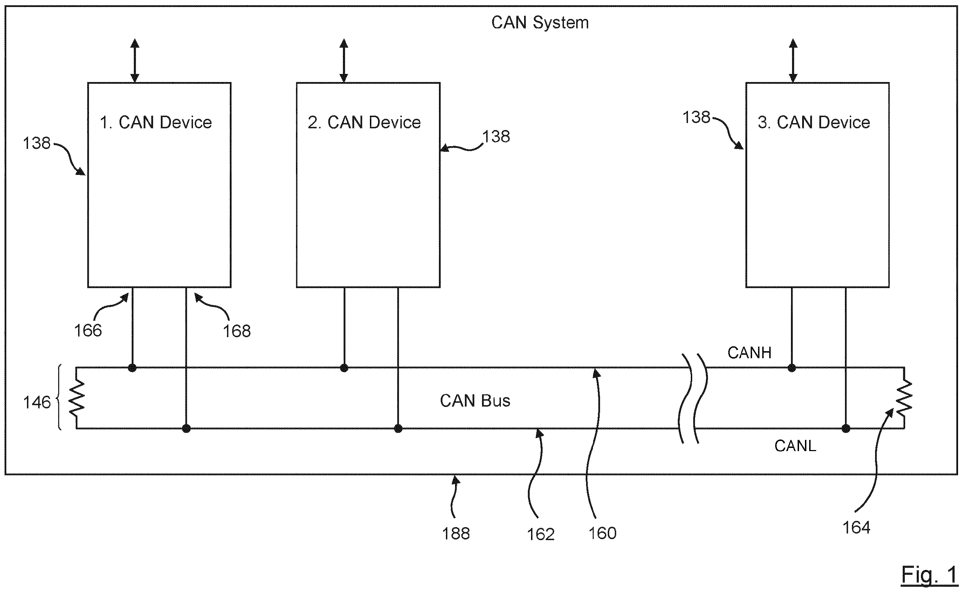

Figure 1 shows an example of a CAN system 188. The CAN system 188 includes a plurality of CAN devices 138 and a CAN BUS network 146. The CAN BUS network 146 includes a first CAN line 160, also referred to as CANH, and a second CAN line 162, also referred to as CANL. The two CAN lines 160, 162 may be coupled at opposite ends via terminating resistors 164. The CAN BUS network 146 may also be referred to as CAN bus 146.

Each CAN device 138 is coupled to the CAN BUS network 146. For coupling, each CAN device 138 includes a first terminal 166, also referred to as a first device terminal 166, and a second terminal 168, also referred to as a second device terminal 168. Each CAN device 138 may be connected to the first CAN line 160 and the second CAN line 162 via the associated device terminals 166, 168.

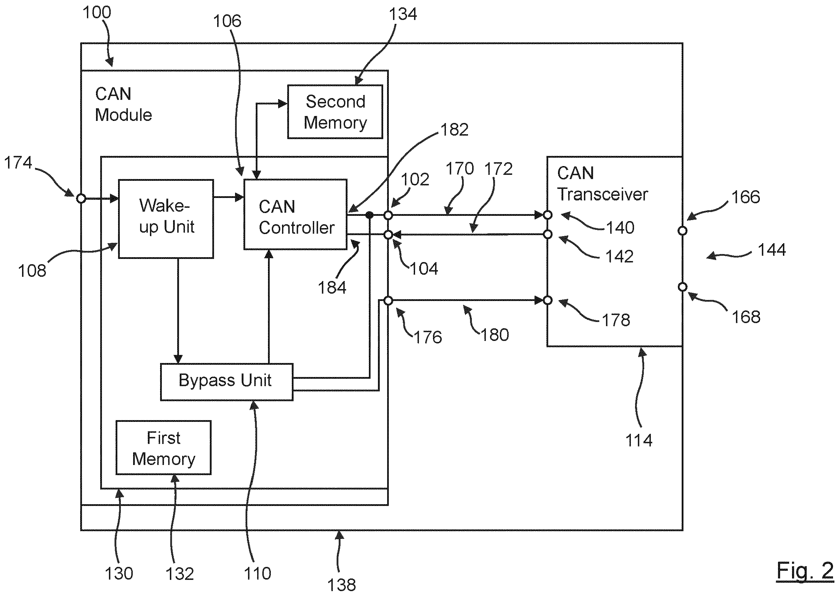

In Figure 2, an example of a CAN device 138 is schematically shown in further detail. Each CAN device 138 of Figure 1 can be formed by a CAN device 138 of Figure 2. The CAN device 138 may have implemented Classical CAN, CAN FD and/or CAN XL. The CAN device 138 comprises a CAN controller 106 and a CAN transceiver 114.

The CAN controller 106 may have implemented Classical CAN, CAN FD and/or CAN XL. The CAN controller 106 may be part of a microprocessor 130, wherein the respective CAN protocol may be implemented by microprocessor 130. The CAN controller 106 comprises a transmit data, TXD, interface 182 and a receive data, RXD, interface 184. The CAN controller 106 and/or the microprocessor 130 may be part of a CAN module 100. The CAN module 100 may be considered as a device or system. The CAN module 100 comprises a first TXD interface 102 and a first RXD interface 104. The TXD interface 182 of the CAN controller 106 may be connected via a signal connection with the first TXD interface 102 of the CAN module 100. The RXD interface 184 of the CAN controller 106 may be connected via another signal connection to the first RXD interface 104 of the CAN module 100.

Via the TXD interface 182, the CAN controller 106 may transmit a TXD signal. The TXD signal may represent one or more CAN frames, in particular in accordance with the respective CAN protocol. Each CAN frame comprises a plurality of bits, each representing either a logical "0" or a logical "1". The bits are transmitted by means of the TXD signal in the form of a bit stream. A sequence of a plurality of bits and/or a sequence of a plurality of CAN frames may therefore be represented by the TXD signal. The RXD interface 184 of the CAN controller 106 may allow the CAN controller 106 to receive a RXD signal. The RXD signal may represent one or more CAN frames. As previously described, each CAN frame may comprise a plurality of bits. The bits are transmitted by means of the RXD signal in the form of a bit stream. A sequence of a plurality of bits and/or a sequence of multiple CAN frames may therefore be represented by the RXD signal.

The CAN transceiver 114 may comprises a TXD interface 140, referred to as the second TXD interface 140. The second TXD interface 140 allows the CAN transceiver 114 to receive the TXD signal. The CAN transceiver 114 may also comprise a RXD interface 142, referred to as the second RXD interface 142. The CAN transceiver 114 may be configured to send the RXD signal via the second RXD interface 142.

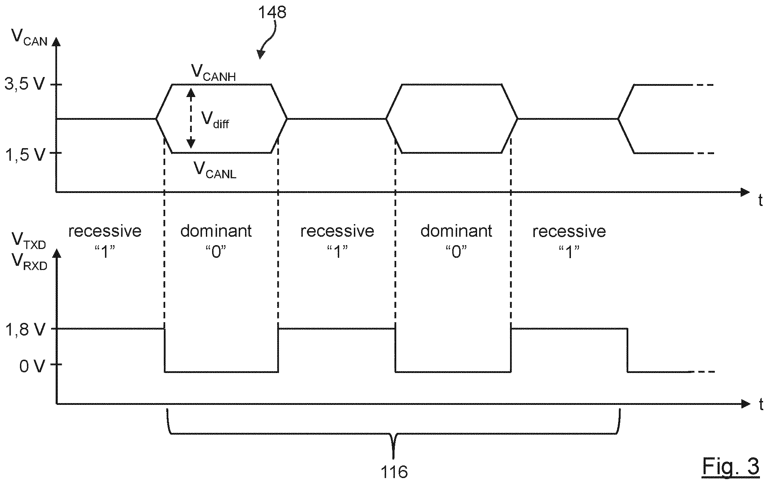

The CAN transceiver 114 may include a CAN BUS interface 144. The CAN transceiver 114 is preferably configured to generate a CAN bus signal 148 based on the TXD signal. An example of the CAN bus signal 148 is schematically shown in Figure 3. The CAN bus signal 148 is a differential voltage signal that can be generated by the CAN transceiver 114 at the CAN BUS interface 144. When the CAN transceiver 114 receives the TXD signal representing the at least one bit, the CAN transceiver 114 may generate the CAN bus signal 148 based on the TXD signal such that the CAN bus signal 148 represents the at least one bit as well. Often, the TXD signal represents a sequence of bits in the form of a bit stream. In this case, the CAN bus signal 148 may be generated by the CAN transceiver 114 such that the CAN bus signal 148 also represents the sequence of bits.

The first CAN BUS interface 144 of the CAN transceiver 114 may be connected to the first CAN bus line 160 of the CAN bus 146. The connection between the first CAN BUS interface 144 and the first CAN bus line 160 may be established via the first and second BUS terminals 166, 168. The first BUS terminal 166 may be connected to and/or configured to be connected to the first bus line 160. The second BUS terminal 168 may be connected to and/or configured to be connected to the second bus line 162.

The CAN transceiver 114 may also be a part of the CAN module 100. Further, the CAN BUS interface 144 of the CAN transceiver 114 may form a CAN BUS interface 144 of the CAN module 100.

Figure 3 schematically shows an example of a signal waveform of a CAN bus signal 148 as a differential voltage signal V_{CAN}. The differential voltage signal is composed of the first voltage signal V_{CANL} and the second voltage signal V_{CANH}. If the first voltage signal V_{CANL} and the second voltage signal V_{CANH} are at the same level, preferably at 2.5 V, this represents the logical bit " 1", which is also referred to as a recessive bit or recessive bit "1". If the first voltage signal V_{CANL} is at a low level, preferably about 1.5 V (as described exemplary in figure 3), and the second voltage signal V_{CANH} is at a high level, preferably about 3.5 V (as described exemplary in figure 3), this represents logic bit "0", which is also referred to as dominant bit or dominant bit "0".

The CAN transceiver 114 may be configured to receive the CAN bus signal 148 of the CAN bus 146 via the CAN BUS interface 144. The CAN transceiver 114 may also be configured to generate and transmit the RXD signal via the second RXD interface 142 based on the received CAN bus signal 148. In an example, if the CAN bus signal 148 shown schematically in Figure 3 is generated on the CAN bus 146, the CAN transceiver 114 may generate the RXD signal also shown schematically in Figure 3 as the RXD signal V_{RXD}. If the RXD signal V_{RXD} is at a first signal level, which is also referred to as a recessive signal level, then the RXD signal V_{RXD} or the first signal level represents the logical bit "1", which is also referred to as a recessive bit or recessive bit "1". If the RXD signal V_{RXD} is at a second signal level, which is also referred to as the dominant signal level, then the RXD signal or the second signal level represents the logical bit "0", which is also referred to as the dominant bit or the dominant bit "0". The recessive signal level of the RXD signal V_{RXD} may be between 1.5 V and 6 V, preferably with an allowable deviation of less than 0.2 V. In an example, recessive signal level of the RXD signal V_{RXD} may be 1.8 V (as described exemplary in figure 3), 3.3 V or 5 V, in each example preferably with an allowable deviation of less than 10%. The dominant signal level of the RXD signal V_{RXD} may be 0 V (as described exemplary in figure 3) in an example, with an allowable deviation of less than 0.2 V. As can be seen from Figure 3, a sequence of bits can be represented via the RXD signal V_{RXD}. The CAN transceiver 114 may be used to convert a CAN bus signal 148 of the CAN bus 146 to the first RXD signal V_{RXD}.

In principle, the CAN transceiver 114 can also be used to convert the TXD signal V_{TXD} into a CAN bus signal 148 in the form of a differential voltage signal V_{CAN} between the first and second BUS terminals 166, 168.

The example for the signal waveform of the RXD signal V_{RXD} from Figure 3 can also be understood in an analogous way as an example for a signal waveform of a TXD signal V_{TXD}. If the TXD signal V_{TXD} is at a first signal level, which is also referred to as a recessive signal level, then the TXD signal V_{TXD} or the first signal level represents the logical bit" 1", which is also referred to as a recessive bit or recessive bit "1". If the TXD signal V_{TXD} is at a second signal level, which is also referred to as the dominant signal level, then the TXD signal or the second signal level represents the logical bit "0", which is also referred to as the dominant bit or the dominant bit "0". The recessive signal level of the TXD signal V_{TXD} may be between 1.5 V (as described exemplary in figure 3) and 6 V, preferably with a permissible deviation of less than 0.2 V. In an example, the recessive signal level of the TXD signal V_{TXD} may be 1.8 V (as described exemplary in figure 3), 3.3 V or 5 V, in each example preferably with an allowable deviation of less than 10%. The dominant signal level of the TXD signal V_{TXD} can be 0 V (as described exemplary in figure 3) in an example, with a permissible deviation of less than 0.2 V. As can be seen from Figure 3, a sequence of bits can be represented via the TXD signal V_{TXD}. The CAN transceiver 114 may be used to convert the TXD signal V_{TXD} into a CAN Bus signal 148 V_{CAN} at the CAN BUS interface 144.

It has been observed that the complexity of the CAN controller 106 and/or the complexity of the microprocessor 130 has increased continuously over the past years. It is expected that the complexity of the CAN controller 106 and/or the complexity of the microprocessor 130 will continue to increase in the future. As the complexity of the CAN controller 106 and/or the complexity of the microprocessor 130 increases, it is expected that the electrical power consumed by the CAN controller 106 and/or the microprocessor 130 will also increase. Especially in the automotive sector, energy consumption is of particular importance. It is desirable that the CAN controller 106 and/or the CAN module 100, which preferably comprises the microprocessor 130, operate in an energy-saving manner.

Figure 2 schematically illustrates an example of a CAN module 100. The CAN module 100 may form part of a CAN device 138. However, it is also possible that the CAN module 100 is designed separately as a device-like component. In another example, the CAN module 100 may be integrated into a larger system (not shown).

The CAN module 100 comprises the first TXD interface 102, the first RXD interface 104 and the CAN controller 106. The CAN controller 106 is coupled to the first TXD interface 102 and to the first RXD interface 104.

The CAN controller 106 may be in an operation state or in a sleep state. The operation state and the sleep state of the CAN controller 106 may each be predefined states of the CAN controller 106. The operation state and sleep state of the CAN controller 106 are different states of the CAN controller 106.

The operation state of the CAN controller 106 may be characterized in that the CAN controller 106 in the operation state comprises the ability to generate a CAN frame and/or transmit a/the CAN frame via the first TXD interface 102. The sleep state of the CAN controller 106 may be characterized in that the CAN controller 106 in the sleep state does not comprise the ability to generate a CAN frame and/or transmit a/the CAN frame via the first TXD interface 102.

In particular, the CAN controller 106 is either in the operation state or in the sleep state. It is possible for the CAN controller 106 to change from the operation state to the sleep state, or vice versa. The CAN controller 106 is configured to transmit a CAN frame via the first TXD interface 102 only in the operation state, in particular to the CAN transceiver 114. To transmit the CAN frame, the CAN controller 106 may, in an example, generate a TXD signal representing the CAN frame to be transmitted. In an example, the CAN frame may be configured according to a CAN standard, like the classic CAN standard, the CAN FD standard or the CAN XL standard. The CAN controller 106 may be configured not to be able to transmit a CAN frame via the first TXD interface 102 in the sleep state. In an example, the CAN controller 106 may lack the capability, in particular a performance capability, to generate and/or transmit the CAN frame in the sleep state. In an example, an electrical power consumption of the CAN controller 106 in the sleep state is less than an electrical power consumption of the CAN controller 106 in the operation state. The power consumption of the CAN controller 106 in the sleep state may be less than 70%, less than 50% or less than 40% of the electrical power consumption of the CAN controller 106 in the operation state. As an effect, the CAN controller 106 consumes much less electrical power in the sleep state than in the operation state. If the CAN controller 106 does not have a CAN frame to generate and/or transmit, it has been found to be a way to save electrical energy to have the CAN controller 106 change from the operation state to the sleep state. For example, if the CAN controller 106 is needed again after a certain time to generate and/or transmit a CAN frame, the CAN controller 106 can change from the sleep state to the operation state. As soon as the CAN controller 106 is back in the operation state, the CAN controller 106 can generate and/or transmit the CAN frame. A change from the sleep state to the operation state may also be referred to as a wake-up.

Figure 2 also schematically illustrates an example of the CAN device 138. The CAN device 138 may comprise the CAN module 100 and the CAN transceiver 114. The CAN transceiver 114 may comprise a TXD interface 140, which is referred to as a second TXD interface 140. For example, the first TXD interface 102 of the CAN module 100 may be coupled to the second TXD interface 140 of the CAN transceiver 114 via the signal connection 170. The CAN controller 106 may transmit a CAN frame to the second TXD interface 140 of the CAN transceiver 114 via the signal connection 170. The CAN transceiver 114 may comprise an RXD interface 142, which is referred to as the second RXD interface 142. The second RXD interface 142 of the CAN transceiver 114 may, for example, be coupled to the first RXD interface 104 of the CAN module 100 via the signal connection 172. The CAN transceiver 114 may transmit a (particularly different) CAN frame to the first RXD interface 104 of the CAN module 100 and/or to the RXD interface 184 of the CAN controller 106 via the signal connection 172. The CAN transceiver 114 may comprise a bus interface 144 configured to be coupled to a CAN bus 146.

Previously, it was explained that the CAN controller 106 may change from an operation state to a sleep state to save electrical power if the CAN controller 106 is not required to generate and/or transmit a CAN frame. In an analogous manner, it may be desirable for the CAN transceiver 114 to also be able to change from an operation state to a sleep state to save electrical power if the CAN transceiver 114 is not needed to generate a CAN bus signal 148 at the bus interface 144. In an example, the CAN transceiver 114 may be in an operation state or in a sleep state.

The operation state and sleep state of the CAN transceiver 114 may each be predefined states of the CAN transceiver 114. The operation state and the sleep state of the CAN transceiver 114 are different states of the CAN transceiver 114.

The operation state of the CAN transceiver 114 may be characterized in that the CAN transceiver 114 in the operation state comprises the ability to generate a CAN frame and/or transmit a/the CAN frame via the first TXD interface 102. The sleep state of the CAN transceiver 114 may be characterized in that the CAN transceiver 114 in the sleep state does not comprise the ability to generate a CAN frame and/or transmit a/the CAN frame via the first TXD interface 102.

In particular, the CAN transceiver 114 is in either the operation state or the sleep state. In an example, the CAN transceiver 114 may be configured such that the CAN transceiver 114 changes from the operation state to the sleep state, or vice versa. The CAN transceiver 114 may be configured to generate a CAN bus signal 148 at the bus interface 144 representing at least one bit and/or at least one CAN frame only in the operation state. In an example, the CAN transceiver 114 is configured to not be able to generate a CAN bus signal 148 in the sleep state. In an example, the CAN transceiver 114 may lack the capability, particularly the performance capability, to generate the CAN bus signal 148 at the bus interface 144 in the sleep state. In an example, an electrical power consumption of the CAN transceiver 114 in the sleep state is less than an electrical power consumption of the CAN transceiver 114 in the operation state. The power consumption of the CAN transceiver 114 in the sleep state may be less than 70%, less than 50%, or less than 40% of the electrical power consumption of the CAN transceiver 114 in the operation state. As an effect, the CAN transceiver 114 consumes much less electrical power in the sleep state than in the operation state. If the CAN transceiver 114 does not need to generate a CAN bus signal 148, allowing the CAN transceiver 114 to change from the operation state to the sleep state has been found to save electrical energy. The CAN transceiver 114 can change from the sleep state to the operation state if, for example, the CAN transceiver 114 is needed again after a certain time to generate a CAN bus signal 148 at the bus interface 144. As soon as the CAN transceiver 114 is back in the operation state, the CAN transceiver 114 may generate the CAN bus signal 148 at the bus interface 144 that represents at least one bit and/or at least one CAN frame. For the CAN transceiver 114, a change from the sleep state to the operation state may also be referred to as a wake-up.

The CAN module 100 further comprises a unit 108, referred to as a wake-up unit 108. The wake-up unit 108 is configured to control the CAN controller 106 such that the CAN controller 106 changes from the sleep state of the CAN controller 106 to the operation state of the CAN controller 106. This change of the CAN controller 106 from the sleep state to the operation state may take a certain amount of time, which may also be referred to as the wake-up time of the CAN controller 106 or controller wake-up time.

Once the CAN controller 106 is in the operation state, the CAN controller 106 may be able to transmit a CAN frame to the second TXD interface 140 of the CAN transceiver 114 via the first TXD interface 102 and in particular the signal connection 170. In response to the CAN frame sent to the second TXD interface 140, the CAN transceiver 114 may begin to change from the sleep state to the operation state. It is therefore possible that the wake-up unit 108 first controls the CAN controller 106 so that the CAN controller 106 changes from the sleep state of the CAN controller 106 to the operation state of the CAN controller 106, and that the CAN controller 106, which is in the operation state, then causes the CAN transceiver 114 to change from the sleep state of the CAN transceiver 114 to the operation state of the CAN transceiver 114 by sending a CAN frame. The CAN transceiver 114 may also take a certain amount of time to change from the sleep state of the CAN transceiver 114 to the operation state of the CAN transceiver 114, which may also be referred to as the wake-up time of the CAN transceiver 114 or transceiver wake-up time.

The previously explained logical sequence, according to which the wake-up unit 108 first causes the CAN controller 106 to wake up and then the CAN controller 106, which is in the operation state, causes the CAN transceiver 114 to wake up, can have the technical effect that both the controller wake-up time and then the transceiver wake-up time must be waited for before a CAN bus signal 148 representing a CAN frame to be transmitted can be generated at the CAN BUS interface 144 via the CAN device 138. A wake-up time of the CAN device 138, which in the previous example is formed by the sum of the controller wake-up time and the CAN transceiver 114 wake-up time, may also be referred to as the device wake-up time. It is desirable to reduce the device wake-up time so that, in practical use of the CAN device 138, it becomes more attractive to place the CAN controller 106 and/or the CAN transceiver 114 in the sleep state as soon as possible to save electrical power.

The CAN module 100, as schematically illustrated for example in Figure 2, further comprises another unit referred to as a bypass unit 110. The bypass unit 110 is coupled to the first TXD interface 102 of the CAN module 100. As an effect, both the bypass unit 110 and the CAN controller 106 may be coupled to the first TXD interface 102. In an example, the CAN module 100 may be configured to provide access to the first TXD interface 102 to either the CAN controller 106 or the bypass unit 110. In particular, the CAN module 100 may be configured to allow the bypass unit 110 (in particular instead of the CAN controller 106) to access the first TXD interface 102 if the CAN controller 106 is in the sleep state. Furthermore, the CAN module 100 may be configured so that the CAN controller 106 (in particular instead of the bypass unit 110) has access to the first TXD interface 102 if the CAN controller 106 is in the operation state.

The bypass unit 110 may be configured to send a predefined bit pattern via the first TXD interface 102. The predefined bit pattern may also be referred to as a wake-up pattern 116. In particular, the wake-up pattern 116 is not configured according to a CAN standard. In an example, the CAN module 100 may form part of the CAN device 138. The first TXD interface 102 may, for example, be coupled to the second TXD interface 140 of the CAN transceiver 114 via the signal connection 170. If the bypass unit 110 sends the wake-up pattern 116 via the first TXD interface 102, the wake-up pattern 116 is transmitted to the second TXD interface 140 of the CAN transceiver 114 via the signal connection 170. The CAN transceiver 114 may be configured to change from the sleep state of the CAN transceiver 114 to the operation state of the CAN transceiver 114 in response to receiving the wake-up pattern 116 via the second TXD interface 140. As an effect, the bypass unit 110 may be used instead of the CAN controller 106 to cause the CAN transceiver 114 to change from the associated sleep state to the operation state of the CAN transceiver 114. Since the bypass unit 110, in particular compared to a CAN controller 106, may be very simply designed in an example to send the predefined bit pattern via the first TXD interface 102, it can be assumed that the bypass unit 110 consumes very little electrical energy.

Further, the wake-up unit 108 of the CAN module 100 is configured to control the bypass unit 110 such that the bypass unit 110 sends the wake-up pattern 116 via the first TXD interface 102. As an effect, the wake-up unit 108 may control both the CAN controller 106 and the bypass unit 110, in particular in parallel, such that the CAN controller 106 changes from the associated sleep state to the operation state and such that the wake-up pattern 116 is sent via the first TXD interface 102, which in an example may cause in parallel both, the CAN Controller 106 and the CAN transceiver 114 to change from the respective sleep state to the respective operation state. As a further effect, both the CAN controller 106 and the CAN transceiver 114 may begin to change from the respective sleep state to the respective operation state parallel in time and/or at least overlapping in time and/or at least substantially simultaneously. Therefore, in order for the CAN transceiver 114 to change from the sleep state to the operation state, it is no longer necessary to wait for the CAN controller 106 to have previously completed the change from the sleep state to the operation state. Rather, the wake-up of the CAN controller 106 and the wake-up of the CAN transceiver 114 may begin at least substantially simultaneously using the CAN module 100, and in particular using the wake-up unit 108 and the bypass unit 110 of the CAN module 100, so that the device wake-up time becomes smaller. As a result, the CAN device 138 can wake up much faster and/or cause a CAN bus signal 148 at the bus interface 144 much faster after a sleep state of the CAN controller 106 and a simultaneous sleep state of the CAN transceiver 114. Due to the smaller device wake-up time and/or due to the faster wake-up of the CAN device 138, the CAN controller 106 and/or the CAN transceiver 114 can be put into sleep state much more often, so that electrical energy can be saved.

The CAN module 100 may comprise another interface 174, referred to as the control interface 174. The wake-up unit 108 may be coupled to the control interface 174. The wake-up unit 108 may receive a signal, referred to as a control signal, via the control interface 174. The control signal may directly or indirectly represent an instruction to wake up the CAN controller 106 and/or to wake up the CAN transceiver 114. In an example, the control signal may represent a predefined group of bits, wherein the group of bits represents the aforementioned instruction. In an (other) example, the control signal may represent a CAN frame to be transmitted via the CAN bus 146 via the CAN device 138. The CAN frame represented by the control signal may indirectly represent the instruction to wake up the CAN controller 106 and/or to wake up the CAN transceiver 114. The wake-up unit 108 may be configured, in response to receiving the control signal that directly or indirectly represents the instruction to wake up the CAN controller 106 and/or to wake up the CAN transceiver 114, to control the CAN controller 106 such that the CAN controller 106 changes from the sleep state to the operation state, and to control the bypass unit 110 such that the bypass unit 110 transmits the wake-up pattern 116 via the first TXD interface 102.

Previously, it was explained that the CAN device 138 may comprise the CAN module 100 and the CAN transceiver 114. The control interface 174 of the CAN module 100 may form a corresponding control interface 174 of the CAN device 138. The CAN BUS interface 144 of the CAN transceiver 114 may form a corresponding CAN BUS interface 144 of the CAN device 138.

In an example, the CAN module 100 comprises a microprocessor 130 of which the CAN controller 106 is implemented. The wake-up unit 108 and/or the bypass unit 110 may also be implemented by the microprocessor 130. Within the microprocessor 130, the CAN controller 106 and the bypass unit 110 may be implemented separately from each other and/or as different units. However, it is also possible that at least a part of the bypass unit 110 is implemented integrally with the CAN controller 106 by the microprocessor 130. As an effect, the microprocessor 130 can implement the CAN controller 106, the bypass unit 110 and/or the wake-up unit 108 in a particularly space-saving manner. The bypass unit 110 may be configured as a hardware unit, as a software unit, or as a combination of a hardware unit and a software unit. Compared to the CAN controller 106, the bypass unit 110 can comprise a significantly smaller technical complexity, so that the bypass unit 110 consumes little electrical power and does not have to be set to a sleep state due to the low electrical power consumption. However, it is not excluded that the bypass unit 110 may be operated in different states, such as either in a sleep state or in a ready state.

The ready state and sleep state of the bypass unit 110 may each be predefined states of the bypass unit 110. The ready state and the sleep state of the bypass unit 110 are different states of the bypass unit 110. The ready state of the bypass unit 110 may be characterized in that the bypass unit 110 in the ready state comprises the ability to generate the wake-up pattern 116 and/or transmit a/the wake-up pattern 116 via the first TXD interface 102. The sleep state of the bypass unit 110 may be characterized in that the bypass unit 110 in the sleep state does not comprise the ability to generate a wake-up pattern 116 and/or transmit a/the wake-up pattern 116 via the first TXD interface 102.

The CAN module 100 may be configured to control the bypass unit 110 such that the bypass unit 110 is in a ready state if the CAN controller 106 is in a sleep state. The CAN module 100 may further be configured to control the bypass unit 110 such that the bypass unit 110 is in the sleep state if the CAN controller 106 is in the operation state.

It has previously been explained that the technical complexity of the bypass unit 110 may be kept very low, at least compared to the technical complexity of the CAN controller 106. As an effect, the bypass unit 110 in the ready state may consume less electrical power than the CAN controller 106 in the operation state. In an example, the an electrical power consumption of the bypass unit 110 in the ready state may be less than 50%, less than 40%, or less than 30% of an electrical power consumption of the CAN controller 106 in the operation state. In another example, the electrical power consumption of the bypass unit 110 in the ready state may even be less than an electrical power consumption of the CAN controller 106 in the sleep state.

In an example, the bypass unit 110 may be in the ready state while the CAN controller 106 is in the sleep state and/or while the CAN controller 106 changes from the sleep state to the operation state. In particular, the bypass unit 110 may be configured to send the wake-up pattern 116 in the ready state via the first TXD interface 102. As an effect, via the bypass unit 110, both the energy consumption of the CAN module 100 and/or the CAN device 138 can be reduced and the wake-up time of the device 138 can be reduced. After the CAN module 100 has changed from the sleep state to the operation state, the bypass unit 110 can be set to the associated sleep state. If the bypass unit 110 is in the associated sleep state, the power consumption of the CAN module 100 and/or the power consumption of the CAN device 138 may be reduced during operation to send messages.

In an example, the CAN module 100 may be configured, if the CAN module 100 is to be changed to the sleep state, to first change the bypass unit 110 to the ready state. The CAN module 100 may be configured to cause the CAN controller 106 to change from the ready state to the sleep state only after the bypass unit 110 is set to the ready state. As an effect, the bypass unit 110 may be configured to cause the CAN transceiver 114 to wake up quickly even if the CAN controller 106 is in the sleep state.

In an example, the wake-up unit 108 is configured to control the bypass unit 110 while the CAN controller 106 is in the sleep state and/or while the CAN controller 106 is changing from the sleep state to the operation state such that the bypass unit 110 sends the wake-up pattern 116 via the first TXD interface 102. As an effect, via the wake-up unit 108, a fast wake-up of the CAN controller 106 and a fast wake-up of the CAN transceiver 114 can be achieved.

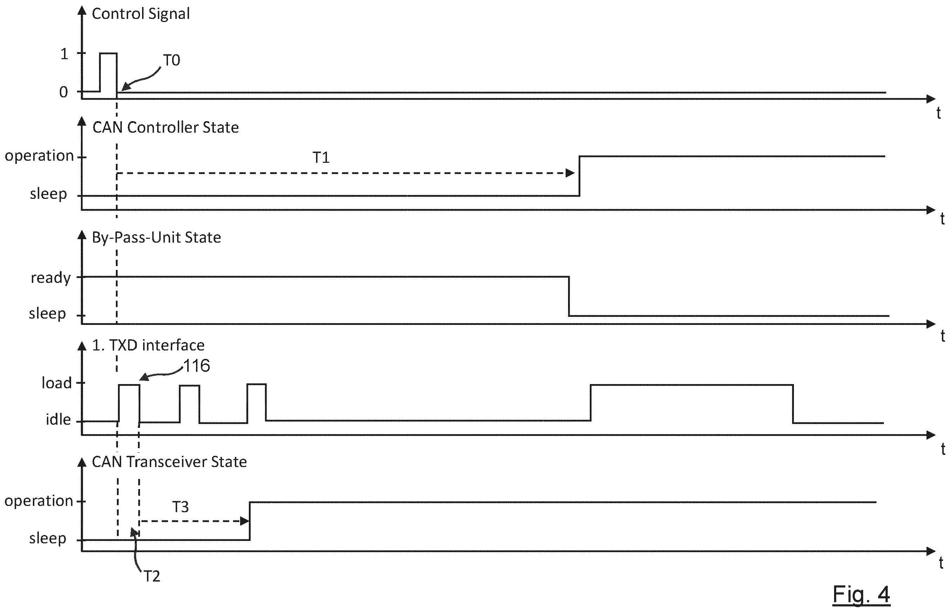

Figure 4 schematically illustrates examples of multiple signal waveforms. In an example, the uppermost signal waveform may be the signal waveform of a control signal that may be transmitted to the wake-up unit 108 via the control interface 174. The control signal may have a level of "1" for a short period of time, which may represent the instruction to wake up the CAN controller 106 and/or the CAN transceiver 114. Based on this instruction, the wake-up unit 108 may control the CAN controller 106 such that the CAN controller 106 changes from the sleep state to the operation state. In an example, the wake-up unit 108 may be coupled to the CAN controller 106 via a signal connection so that the wake-up unit 108 may send a wake-up signal to the CAN controller 106. In order for the CAN controller 106 to change from the sleep state to the operation state, it may be necessary for the CAN controller 106 to load data from a first memory 132 and/or data from a second memory 134. The first memory 132 may be implemented by the microprocessor 130 and/or may form part of the microprocessor 130. The second memory 134 may be configured external to and/or separate from the microprocessor 130. However, the second memory 134 may form part of the CAN module 100. The second memory 134 may be implemented at a lower cost than the first memory 132. However, it is possible that the data from the first memory 132 can be read out faster than the data from the second memory 134. The data may be stored in encrypted form in the second memory 134. Reading out the data from the first and/or second memory 132, 134 and possibly other processes started within the CAN controller 106 for wake-up may cause the CAN controller 106 to require the controller wake-up time T1 to change from the sleep state to the operation state.

The second uppermost signal waveform in Figure 4 may schematically represent an example of the progression of the state of the CAN controller 106. In this example, the CAN controller 106 is in the sleep state if the wake-up unit 108 receives the control signal that has the level "1" for the short period of time. The end of the level "1" can be referred to as the start time T0. It should be assumed that the wake-up unit 108 controls the CAN controller 106 from the start time T0 in order to start the wake-up of the CAN controller 106. From the start time T0, the CAN controller 106 may, in an example, require the controller wake-up time T1 to change from the sleep state to the operation state. Only after the CAN controller 106 is in the operation state, the CAN controller 106 may have reached the capability to generate a CAN frame and/or send it via the first TXD interface 102.

The third uppermost signal waveform in Figure 4 may schematically represent an example of the progression of the state of the bypass unit 110. In this example, the bypass unit 110 is in the ready state while the CAN controller 106 is in the sleep state. At the start time T0, the bypass unit 110 may be in the ready state. If the bypass unit 110 is in the ready state, the bypass unit 110 may generate and/or send the wake-up pattern 116 via the TXD interface 102 without delay. It should be assumed that the wake-up unit 108 controls the bypass unit 110 from the start time T0 such that the bypass unit 110 starts generating the wake-up pattern 116 and/or sending the wake-up pattern 116 via the first TXD interface 102.

In an example, the bypass unit 110 is configured separately from the CAN controller 106. For example, the bypass unit 110 and the CAN controller 106 may be implemented separately, in particular spatially separated, within the microprocessor 130. The microprocessor 130 may be configured to ensure the ready state of the bypass unit 110 while at the same time the CAN controller 106 is in the sleep state or changes from the sleep state to the operation state. As an effect, the bypass unit 110 may generate and/or send the wake-up pattern 116 via the first TXD interface 102 while the CAN controller 106 is in the sleep state or changing from the sleep state to the operation state.

Figure 3 schematically shows two signal waveforms, each representing an example of the wake-up pattern 116. The upper signal waveform in Figure 3 schematically shows a differential voltage signal as a CAN bus signal 148, also referred to as bus signal 148, that can be generated at the first and second bus terminals 166, 168 of the CAN BUS interface 144. The exemplary bus signal can represent the following bit sequence: recessive 1-bit, dominant 0-bit, recessive 1-bit, dominant 0-bit. This bit sequence may be an example of the wake-up pattern 116, in particular 1-0-1-0. The lower signal waveform in Figure 3 schematically representing an example of a signal V_{TXD} at the first TXD interface 102. The signal V_{TXD} at the first TXD interface 102 may also represent the bit sequence: recessive 1-bit, dominant 0-bit, recessive 1-bit, dominant 0-bit. In other words, the signal V_{TXD} at the first TXD interface 102 may represent an example of the wake-up pattern 116 (1-0-1-0). In principle, the wake-up pattern 116 may also be another predefined bit sequence. Preferably, the wake-up pattern 116 comprises at least four bits. In addition, the wake-up pattern 116 comprises in particular less than 8 bits, less than 12 bits or less than 16 bits. For the CAN frame, it may be provided that the CAN frame comprises at least 29 bits, even without payload. As an effect, the wake-up pattern 116 may comprise fewer bits than a CAN frame. As a further effect, the wake-up pattern 116 may be transmitted from the first TXD interface 102 to the second TXD interface 140 in a much shorter time. It should be noted that the wake-up pattern 116 in an example is not, or need not be, compliant with the CAN standard.

The fourth uppermost signal waveform in Figure 4 may schematically represent an example of the signal load at the first TXD interface 102. It can be seen from the signal that the bypass unit 110 can start generating and sending a wake-up pattern 116 via the first TXD interface 102 very shortly after the start time T0. Within a period of time referred to as pattern time T2, the wake-up pattern 116 is transmitted by the bypass unit 110 via the first TXD signal interface 102, and then via the signal connection 170 to the second TXD signal interface 140 of the CAN transceiver 114. The CAN transceiver 114 can then start to wake up, so that the CAN transceiver 114 changes from the sleep state (of the CAN transceiver 114) to the operation state (of the CAN transceiver 114) within the transceiver wake-up time T3. The lowest signal waveform in Figure 4 may schematically represent an example of the progression of the state of the CAN transceiver 114. In an example, a technical complexity of the CAN transceiver 114 may be smaller than a technical complexity of the CAN controller 106, such that the transceiver wake-up time T3 is smaller than the controller wake-up time T1. Furthermore, if the wake-up pattern 116 comprises only a few bits such that the pattern time T2 is small, in an example, it may be the case that the CAN transceiver 114 reaches the associated operation state before the CAN controller 106 reaches the associated operation state. As an effect, the device wake-up time of the CAN device 138 decreases to the controller wake-up time T1 of the CAN controller 106.

Previously, it was explained that the CAN controller 106 may require the controller wake-up time T1 to change from the sleep state of the CAN controller 106 to the operation state of the CAN controller 106. In an example, the bypass unit 110 requires a pattern time T2 to send the wake-up pattern 116 via the first TXD interface 102. The pattern time T2 may be less than the wake-up time T1, in particular the pattern time T2 may be less than 40%, less than 30% or less than 20% of the wake-up time T1. As an effect, the wake-up pattern 116 may be sent multiple times via the first TXD interface 102 during the controller wake-up time T1. In an example, the wake-up unit 108 is configured to control the bypass unit 110 such that the bypass unit 110 sends the wake-up pattern 116 multiple times in succession via the first TXD interface 102. The sending can take place during the controller wake-up time T1. By sending the wake-up pattern 116 multiple times, it is possible to achieve robustness against interference so that the CAN transceiver 114 wakes up as quickly as possible after the start time T0. In an example, the wake-up unit 108 is configured to control the bypass unit 110 such that the bypass unit 110 successively sends at least five wake-up pattern 116s, at least ten wake-up pattern 116s, or at least 15 wake-up pattern 116s during the controller wake-up time T1 via the first TXD interface 102. As an effect, it can be ensured with a very high probability that the CAN transceiver 114 reaches the operation state in parallel in time and or even before the CAN controller 106.

In an example, the CAN module 100 may be configured such that the wake-up unit 108 controls the bypass unit 110 such that at least one further wake-up pattern 116 is sent to the second TXD interface 140 of the CAN transceiver 114 via the first TXD interface 102 and the signal connection 170 after the CAN transceiver 114 has changed from the sleep state to the operation state by a previous wake-up pattern 116. As a result, in this example, at least one wake-up pattern 116 is transmitted to the second TXD interface 140 of the CAN transceiver 114 while the CAN transceiver 114 is in the operation state, wherein the CAN transceiver 114 is configured to generate a bus signal at the CAN BUS interface 144 that represents the at least one wake-up pattern 116 (that the CAN transceiver 114 received in the operation state). As an effect, the wake-up pattern 116 may be represented by the bus signal 148. If, as exemplified and schematically illustrated in Figure 1, a CAN system 188 comprises multiple CAN devices 138, the bus signal 148 may be used to cause one CAN device 138 to wake up another CAN device 138.

It was previously explained that the CAN module 100 may comprise a first memory 132 and a second memory 134. The CAN module 100 may further comprise a microprocessor 130, wherein in an example, the CAN controller 106, the wake-up unit 108, and the bypass unit 110 may be implemented and/or formed by the microprocessor 130. In an example, the microprocessor 130 may also comprise the first memory 132. In an example, the second memory 134 may be a flash memory for storing data. In an example, the second memory 134 of the CAN module 100 may be configured to be spatially separate from the microprocessor 130. However, the microprocessor 130 may in particular be coupled to the second memory 134 via a signal connection. In addition, the microprocessor 130 may be configured to load and/or receive data from the second memory 134, which in an example is necessary for the CAN controller 106 to change from the sleep state of the CAN controller 106 to the operation state of the CAN controller 106. It should be noted that the data in the second memory 134 may be encrypted. Further data may be loaded and or received from the first memory 132 to wake up the CAN controller 106. In an example, a transmission speed, in particular including a possibly associated decryption, of data from the second memory 134 to the microprocessor 130 and/or the CAN controller 106 is slower than a transmission speed of data from the first memory 132 to the CAN controller 106. The microprocessor 130 and/or the CAN controller 106 may be configured to decrypt the data. In the first memory 132, the data may be accessible in unencrypted form at least to the microprocessor 130 and/or to the CAN controller 106. The slower transfer rate of data from the second memory 134 to the microprocessor 130 and/or the CAN controller 106 may be one cause (of possibly several causes) why the CAN controller 106 requires the controller wake-up time T1 to wake up.

In an example, the CAN transceiver 114 may comprise a second enable interface 178 that may be used to enable or disable the CAN transceiver 114. In an example, the CAN transceiver 114 may be configured to allow only the activated CAN transceiver 114 to be in the sleep state or operation state. The CAN transceiver may further be configured such that the deactivated CAN transceiver 114 cannot be set to either the sleep state or the operation state. The CAN transceiver 114 may, for example, be coupled to a power supply in the enabled state. In the deactivated state, the CAN transceiver 114 may, for example, be decoupled from the power supply.

In an example, the CAN module 100 may comprise a first enable interface 176. In particular, if the CAN module 100 forms part of the CAN device 138, the first enabling interface 176 may be connected to the second enabling interface 178 of the CAN transceiver 114 via a further signal connection 180. In an example, the bypass unit 110 is coupled to the first enable interface 176 of the CAN module 100. The bypass unit 110 may be configured to send an enable signal via the first enable interface 176, in particular to the CAN transceiver 114. The CAN transceiver 114 may be configured to activate in response to receiving the enable signal. The bypass unit 110 may be configured to send the at least one wake-up pattern 116 only after the enable signal is sent. In an example, the bypass unit 110 may be controlled by the wake-up unit 108 to send the at least one wake-up pattern 116. In response to being controlled by the wake-up unit 108, the bypass unit 110 may first send the enable signal via the first enable interface 176 so that the CAN transceiver 114 is activated. Thereafter, and further in response to the control by the wake-up unit 108, the bypass unit 110 may send the at least one wake-up pattern 116 to the CAN transceiver 114 via the first TXD interface 102. If the at least one wake-up pattern 116 is transmitted to the second TXD interface 140 of the CAN transceiver 114, the CAN transceiver 114 may already be activated (in particular by the previous transmission of the enable signal), so that the CAN transceiver 114 changes from the sleep state to the operation state based on the wake-up pattern 116.

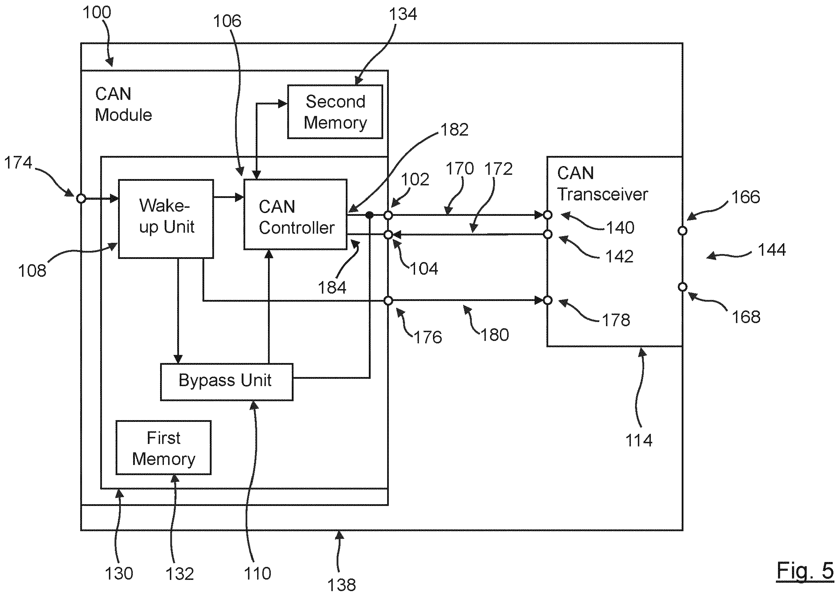

Figure 5 schematically illustrates a further example of the CAN module 100 and a further example of the CAN device 138. For the two examples, it may apply in an analogous manner that instead of the bypass unit 110, the wake-up unit 108 is coupled to the first enable interface 176. Instead of the bypass unit 110, in an example, the wake-up unit 108 may be configured to transmit the enable signal via the first enable interface 176, in particular to the CAN transceiver 114. Furthermore, the wake-up unit 108 may be configured to control the bypass unit 110 such that the bypass unit 110 sends the at least one wake-up pattern 116 via the first TXD interface 102 only after the wake-up unit 108 has previously sent the enable signal via the first enable interface 176. For such an embodiment of the CAN module 100 and/or the CAN device 138, reference is made in an analogous manner to the preceding explanations, preferred features, technical effects and advantages in an analogous manner, as explained in particular in the preceding section.

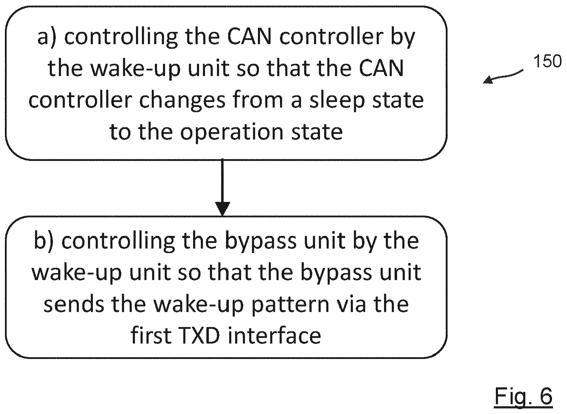

Figure 6 schematically illustrates an example of a method 150 for the controller area network, CAN, module 100. The CAN module 100 comprising the first transmit data, TXD, interface 102, a first receive data, RXD, interface 104, the CAN controller 106, the wake-up unit 108, and the bypass unit 110, wherein the CAN controller 106 is coupled to the first TXD interface 102 and to the first RXD interface 104, wherein the bypass unit 110 is coupled to the first TXD interface 102, wherein the CAN controller 106 is configured to send a CAN frame to the CAN transceiver 114 via the first TXD interface 102 only in an operation state, wherein the bypass unit 110 is configured to send a predefined bit pattern 116, referred to as the wake-up pattern 116, to the CAN transceiver 114 via the first TXD interface 114, and wherein the method comprises the following steps:
a) controlling the CAN controller by the wake-up unit so that the CAN controller changes from a sleep state to the operation state, and
b) controlling the bypass unit by the wake-up unit so that the bypass unit sends the wake-up pattern via the first TXD interface.

For the method 150, reference is made to the advantageous explanations, preferred features, technical effects, and advantages in an analogous manner as previously elucidated for the CAN module 100, the CAN device 138 and/or the CAN system 188 in connection with Figures 1-5.

Although the described exemplary embodiments disclosed herein focus on modules, devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A Controller Area Network, CAN, module comprising:
a first transmit data, TXD, interface,
a first receive data, RXD, interface,
a CAN controller,
a wake-up unit, and
a bypass unit,
wherein the CAN controller is coupled to the first TXD interface and to the first RXD interface,
wherein the bypass unit is coupled to the first TXD interface,
wherein the CAN controller is configured only in an operation state to send a CAN frame to a CAN transceiver via the first TXD interface,
wherein the wake-up unit is configured to control the CAN controller such that the CAN controller changes from a sleep state to the operation state,
wherein the bypass unit is configured to send a predefined bit pattern, referred to as a wake-up pattern, to the CAN transceiver via the first TXD interface, and
wherein the wake-up unit is configured to control the bypass unit so that the bypass unit sends the wake-up pattern via the first TXD interface.

2. The CAN module according to the preceding claim, wherein the bypass unit is in a ready state while the CAN controller is in the sleep state and/or while the CAN controller changes from the sleep state to the operation state, and wherein the bypass unit is configured in the ready state to send the wake-up pattern via the first TXD interface.

3. The CAN module according to any of the preceding claims, wherein the wake-up unit is configured, while the CAN controller is in the sleep state and/or while the CAN controller changes from the sleep state to the operation state, to control the bypass unit so that the bypass unit sends the wake-up pattern via the first TXD interface.

4. The CAN module according to any of the preceding claims, wherein the wake-up unit is configured to control the bypass unit so that the bypass unit sends the wake-up pattern multiple times in succession via the first TXD interface.

5. The CAN module according to any of the preceding claims, wherein the CAN controller requires a wake-up time to change from the sleep state to the operation state, and wherein the bypass unit is configured to send at least five, ten, or fifteen wake-up patterns during the wake-up time via the first TXD interface.

6. The CAN module according to any of the preceding claims, wherein the bypass unit and the CAN controller are configured separately from each other.

7. The CAN module according to any of the preceding claims, wherein the wake-up pattern consists of a bit sequence of a dominant bit, a recessive bit, a dominant bit, and a recessive bit.

8. The CAN module according to any of the preceding claims, wherein the CAN module comprises a microprocessor in which the CAN controller, the wake-up unit, and the bypass unit are integrated.

9. The CAN module according to the preceding claim,
wherein the microprocessor comprises a first memory,
wherein the CAN module comprises a second memory,
wherein the microprocessor is coupled to the second memory, and
wherein the CAN controller is configured to load and/or receive data from the second memory for changing from the sleep state to the operation state.

10. The CAN module according to any of the preceding claims, wherein the bypass unit is coupled among the interfaces of the CAN module only to the first TXD interface and optionally to an enable interface of the CAN module.

11. The CAN module according to the preceding claim, wherein the bypass unit is coupled to the enable interface of the CAN module, and wherein the bypass unit is configured to send an enable signal to the CAN transceiver via the enable interface, and wherein the bypass unit is configured to send the at least one wake-up pattern only after sending the enable signal.

12. The CAN module according to any of the preceding claims 1 to 10, wherein the wake-up unit is coupled to the enable interface, wherein the wake-up unit is configured to send an enable signal to the CAN transceiver via the enable interface, and wherein the wake-up unit is configured to control the bypass unit such that the bypass unit sends the at least one wake-up pattern only after sending the enable signal.

13. A CAN device comprising:
a CAN module according to any of the preceding claims, and
a CAN transceiver,
the CAN transceiver comprising a second TXD interface coupled to the first TXD interface of the CAN module,
wherein the CAN transceiver comprises a second RXD interface coupled to the first RXD interface of the CAN module, and
wherein the CAN transceiver comprises a bus interface configured to be coupled to a CAN bus.

14. The CAN device according to the preceding claim, wherein the CAN transceiver is configured to generate a bus signal at the bus interface based on a received wake-up pattern such that the bus signal represents the wake-up pattern.

15. A method for a controller area network, CAN, module comprising a first transmit data, TXD, interface, a first receive data, RXD, interface, a CAN controller, a wake-up unit, and a bypass unit, wherein the CAN controller is coupled to the first TXD interface and to the first RXD interface, wherein the bypass unit is coupled to the first TXD interface, wherein the CAN controller is configured to send a CAN frame to a CAN transceiver via the first TXD interface only in an operation state, wherein the bypass unit is configured to send a predefined bit pattern, referred to as a wake-up pattern, to the CAN transceiver via the first TXD interface, and wherein the method comprises the following steps:
a) controlling the CAN controller by the wake-up unit so that the CAN controller changes from a sleep state to the operation state, and
b) controlling the bypass unit by the wake-up unit so that the bypass unit sends the wake-up pattern via the first TXD interface.
